Europäisches Patentamt

(19) European Patent Office

Office européen des brevets

(11) Numéro de publication: **0 166 662**
**B1**

(12) **FASCICULE DE BREVET EUROPÉEN**

(45) Date de publication du fascicule du brevet:
17.01.90

(21) Numéro de dépôt: 85401292.9

(22) Date de dépôt: 26.06.85

(51) Int. Cl. ⁴: **C 09 K   5/06**

(54) Procédé de préparation de matériaux composites pour le stockage et le transport de l'énergie.

(30) Priorité: 29.06.84 FR 8410343

(43) Date de publication de la demande:
02.01.86 Bulletin 86/01

(45) Mention de la délivrance du brevet:
17.01.90 Bulletin 90/03

(84) Etats contractants désignés:
BE CH DE IT LI LU NL

(56) Documents cité:
DE-A-3 045 842
FR-A-2 491 941
GB-A-1 584 559
US-A-4 003 426
US-A-4 111 189
US-A-4 273 667

**Le dossier contient des informations techniques présentées postérieurement au dépôt de la demande et ne figurant pas dans le présent fascicule.**

(73) Titulaire: Etablissement Public dit: CENTRE NATIONAL DE LA RECHERCHE SCIENTIFIQUE (CNRS)
15, Quai Anatole France
F-75007 Paris (FR)

(72) Inventeur: Fiaud, Patrice
11, rue Lippmann
F-75020 Paris (FR)
Inventeur: Schvartsman, Sylvie
18, rue de l'Amiral Mouchez
F-75014 Paris (FR)
Inventeur: Quemada, Daniel
14, rue de Monzaia
F-75019 Paris (FR)
Inventeur: Tardi, Michel
2, rue du Bief
F-91380 Chilly-Mazarin (FR)

(74) Mandataire: Warcoin, Jacques
Cabinet Régimbeau 26, avenue Kléber
F-75116 Paris (FR)

LIBERGRAF, STOCKHOLM 1990

## Description

La présente invention concerne de nouveaux matériaux composites stables utiles, en particulier, pour le stockage et le transfert d'énergie calorifique ou frigorifique.

La possibilité d'utiliser sur une grande échelle, dans le stockage ou le transfert de chaleur, la chaleur latente de transition de phase a, jusqu'ici, été limitée précisément par ladite transition de phase. En effet, on comprend aisément qu'un produit solide qui devient liquide, ou réciproquement, entraîne un changement total dans le fonctionnement d'un dispositif dans lequel il est inséré, ce qui le rend, la plupart du temps, inutilisable.

Pour résoudre un tel problème, le brevet US-4 003 426 propose une structure constituée d'une matrice réticulée comportant une pluralité de petites cavités non liées entre elles et un matériau susceptible de fondre ou de se solidifier. Ledit matériau remplissant les cavités présente une chaleur latente de passage solide/liquide ou liquide/solide élevé.

Le but de la présente invention est donc de fournir un matériau qui, tout en "changeant de phase", conserve pour l'essentiel des caractéristiques mécaniques voisines avant et après le changement de phase.

Plus précisément, il s'agit d'un matériau composite constitué d'une matière pouvant être polymérisée au sein d'un liquide de telle sorte que le composite obtenu ne devienne pas liquide lors de la transition de phase solide/liquide dudit liquide.

De façon générale, un tel type de matériau composite stable peut être obtenu par la mise en oeuvre du procédé suivant:

On dissout dans un liquide, au moins un monomère choisi dans le groupe des composés comportant au moins une insaturation éthylénique, on polymérise ledit monomère de façon à créer un réseau tridimensionnel de polymérisat, sous forme dispersée ou continue, emprisonnant le liquide, ledit liquide étant un liquide inerte vis-a-vis de la polymérisation et ledit au moins un monomère étant entièrement soluble dans ledit liquide.

Le liquide mis en oeuvre constituera l'élément du composite qui changera de phase; il est donc nécessaire de choisir ce dernier avec des caractéristiques physico-chimiques déterminées. Ce liquide pourra permettre la dissolution du monomère polymérisable en son sein et, en outre, ce liquide ne sera pas susceptible de réagir lors de la polymérisation. Enfin, et cet aspect est particulièrement important, il sera nécessaire que la température de changement de phase, c'est-à-dire le point de fusion de ce liquide, soit déterminée de façon à pouvoir être utilisée au sein du système qui doit l'accueillir.

On utilisera, en particulier, un liquide organique en présence d'un monomère soluble. Parmi les liquides organiques particulièrement inertes, on pourra utiliser les paraffines, dont les températures de fusion varient de -12°C pour les $C_{12}H_{26}$ à +76°C pour $C_{36}H_{74}$. Cette fourchette de températures de fusion est particulièrement appropriée pour les usages courants du stockage d'énergie.

Lorsque le liquide utilisé est une paraffine, ou d'ailleurs d'autres types de liquides organiques, on pourra utiliser comme monomères, seuls ou en combinaison, des monomères à insaturation éthylénique tels que le styrène, des dérivés vinyliques, des esters de vinyle, des esters de l'acide acrylique ou des esters de l'acide métacrylique, en particulier: le styrène, l'acétate de vinyle, le métacrylate de méthyle ou le divinylbenzène; ces différents composés pouvant être utilisés en combinaison.

Suivant les paramètres de polymérisation, en particulier en fonction de la quantité de styrène polymérisé dans le liquide, on obtient des produits qui varient de la consistance d'un gel jusqu'à la consistance d'un solide. En particulier, les proportions de monomère, notamment de styrène, pouvant varier de 5 à 40 % en poids, on observe des variations quasi-continues de consistance pour, partant d'un produit ayant la consistance d'un gel, pour une quantité de styrène de l'ordre de 5 % en poids, obtenir un solide lorsque la quantité de styrène utilisée atteint 25 à 30 % en poids.

On peut, enfin, effectuer deux types de polymérisation suivant la nature du produit que l'on désire obtenir. Le produit peut se présenter sous forme de billes obtenues par une polymérisation en émulsion, c'est-à-dire, que dans une phase organique non miscible à l'eau telle que la paraffine par exemple, on dissout les différents monomères polymérisables, la polymérisation étant effectuée au sein d'un milieu aqueux. Dans ce cas, il faut soumettre l'ensemble milieux aqueux et phase organique à une homogénéisation par un traitement approprié, par exemple traitement aux ultrasons, de façon à obtenir une émulsion très homogène.

Dans ces conditions, on obtient un produit qui peut présenter, lui aussi, des caractéristiques variant du gel jusqu'au produit solide mais qui se présente sous forme dispersée. La mise en oeuvre du procédé selon la présente invention empêche toute coalescence des gouttelettes de l'émulsion ainsi obtenue.

Dans le cas, au contraire, où l'on désire obtenir un produit massif, la polymérisation est effectuée en l'absence de milieu aqueux. Dans ces conditions, on obtient un bloc de matière dont la consistance peut varier d'un gel à un solide.

Les conditions de polymérisation en elles-mêmes ne constituent pas des caractéristiques du procédé selon la présente invention. Elles sont connues pour les différents monomères mis en oeuvre, par exemple pour les polymères de styrène ainsi que les copolymères de styrène et du divinylbenzène qui ont déjà été polymérisés, soit en masse, soit en émulsion.

La polymérisation peut être effectuée par différents moyens, notamment par chauffage du mélange, par exemple à des températures pouvant varier entre 40 et 100°C; bien entendu, la température du milieu réactionnel devra être supérieure à la température de fusion du liquide, ceci afin que l'ensemble de la réaction puisse se dérouler, au moins au début, en milieu liquide.

Là encore, suivant les températures et la durée de polymérisation qui est en général de l'ordre de quelques heures, on pourra obtenir un réseau tridimensionnel plus ou moins réticulé qui assurera une consistance plus ou moins importante du matériau composite selon la présente invention. Mais, d'autres moyens de polymérisation peuvent être utilisés, par exemple une irradiation en ultra-violet.

Il convient de remarquer, enfin, que pour que le matériau composite selon l'invention présente des propriétés reproductibles, il est important que le liquide et le solide ne présentent pas une trop grande différence de volume massique; en effet, si tel n'était pas le cas, le produit, en se solidifiant en particulier, serait susceptible de faire éclater le réseau de polymère, ce qui aurait pour résultat de détruire ledit matériau.

Dans le cas des paraffines dans un réseau de polystyrène tel que cela sera décrit dans ce qui suit, les différences de volume massique sont suffisamment faibles pour que les contraintes engendrées soient très bien supportées par le matériau composite.

Comme cela sera mis en évidence dans les exemples ci-après, le produit obtenu peut se présenter sous forme d'un bloc solide ayant l'aspect d'un bloc de paraffine normal mais qui résiste à des températures de l'ordre de 200°C sans fondre, alors qu'il contient environ 70 % de paraffine ayant un point de fusion inférieur à 80°C.

En outre, le produit en cause, dans sa forme stabilisée, n'exsude pas de liquide, même au-delà de la température de transition de la paraffine.

Les essais réalisés dans les exemples montrent néanmoins qu'au voisinage de la température de transition de la paraffine on note bien une modification de la chaleur spécifique du produit global, ceci mettant bien en évidence un changement de phase mais celui-ci n'est détectable que sur le plan calorifique et non pas sur le plan mécanique.

Ces matériaux composites sont utilisables notamment pour le stockage de l'énergie. La forme sous laquelle ils pourront se présenter pour stocker l'énergie dépendra, bien entendu, de la nature exacte du dispositif de récupération de chaleur mis en oeuvre. Par exemple, lorsqu'il s'agira d'un lit fixe, on utilisera de préférence le produit sous forme de bloc, lorsqu'il s'agira d'un lit fluidisé ou d'un lit fluide, on pourra utiliser des billes.

On peut, en particulier, utiliser ces composés comme capteurs d'énergie, par exemple dans des capteurs solaires. Au cas où le composite est une phase d'une suspension, le fluide de stockage peut être le fluide caloporteur.

Bien entendu, le composite peut comporter d'autres éléments qui, en particulier, modifient son spectre d'absorption vis à vis de certains rayonnements, notamment du rayonnement solaire, de façon à adapter le produit à la captation de l'énergie solaire.

De même, afin d'assurer une bonne transmission de la chaleur au sein des blocs, on pourra incorporer au matériau des éléments bons conducteurs de la chaleur tels que des paillettes métalliques.

On peut également envisager d'autres applications pour ces matériaux, par exemple ils peuvent être utilisés pour le réchauffement des sols par adjonction de ces matériaux en surface, par exemple au cours d'un cycle jour/nuit.

Enfin, dans le cadre de leur utilisation en tant qu'éléments de stockage ou de transfert de l'énergie, les matériaux composites selon la présente invention sont particulièrement utiles dans les pompes à chaleur qui, pour présenter des rendements intéressants, doivent travailler avec de faibles différences de températures et des températures stables si possible, conditions qui peuvent être facilement remplies par les matériaux selon la présente invention qui travaillent au voisinage de la température de fusion des matériaux contenus dans le composite.

Les exemples ci-après sont destinés plus particulièrement à mettre en évidence d'autres caractéristiques et avantages de la présente invention et certains éléments particuliers de son mode de réalisation.

**Exemple 1**

**Polyméristion en masse**

On mélange intimement les composants suivants:
-styrène: $5 \times 10^{-1}$ mole/l de paraffine
-divinylbenzène: 10 % en poids du styrène
-paraffine: q.s.p.

Le mélange homogène est chauffé pendant 6 heures à 75° C.

On obtient ainsi un bloc ayant l'apparence d'un bloc de paraffine à température ordinaire et qui, au-delà de la température de fusion de la paraffine, conserve son apparence sans qu'il y ait d'exsudation de paraffine liquide.

**Exemple 2**

**Polymérisation en émulsion**

Dans un réacteur on mélange les composants suivants:

- 28,99 g de paraffine (25 % en masse du mélange)

- 1,8 de styrène (5 x 10$^{-1}$ mole/l de paraffine)
- 0,18 g de divinylbenzène (10 % en masse du styrène)
- 86,97 g d'eau (75 % en masse du mélange)
- 0,5 g de persulfate à titre d'amorceur
- 1,74 g de dodécylsulfate de sodium (5 x 10$^{-2}$) mole/l du mélange)

Le mélange ainsi obtenu est traité par des ultrasons à la puissance maximum pendant 2 minutes afin d'obtenir une émulsion stable et très fine.

L'émulsion ainsi obtenue est polymérisée pendant 6 heures à 75°C.

On obtient ainsi une émulsion d'un produit qui est stable et qui ne change pas de consistance à la température de fusion de la paraffine utilisée.

**Exemple 3**

Les caractéristiques de chaleur spécifique des composés préparés à l'exemple 2 ont été étudiées:

**Paraffine seule**

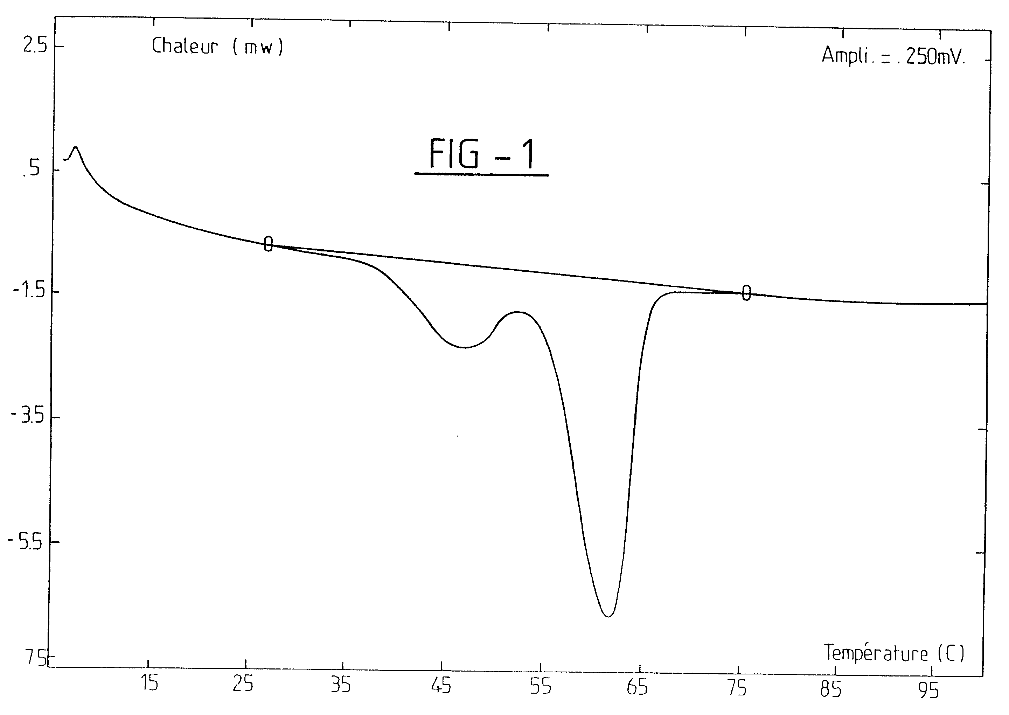

m = 7,48 mg
H = 49,5 cal/g
La fusion est détectée entre 27,4°C et 75,4°C.
La température au sommet du pic est 62,4°C (figure 1).

**Paraffine + styrène**

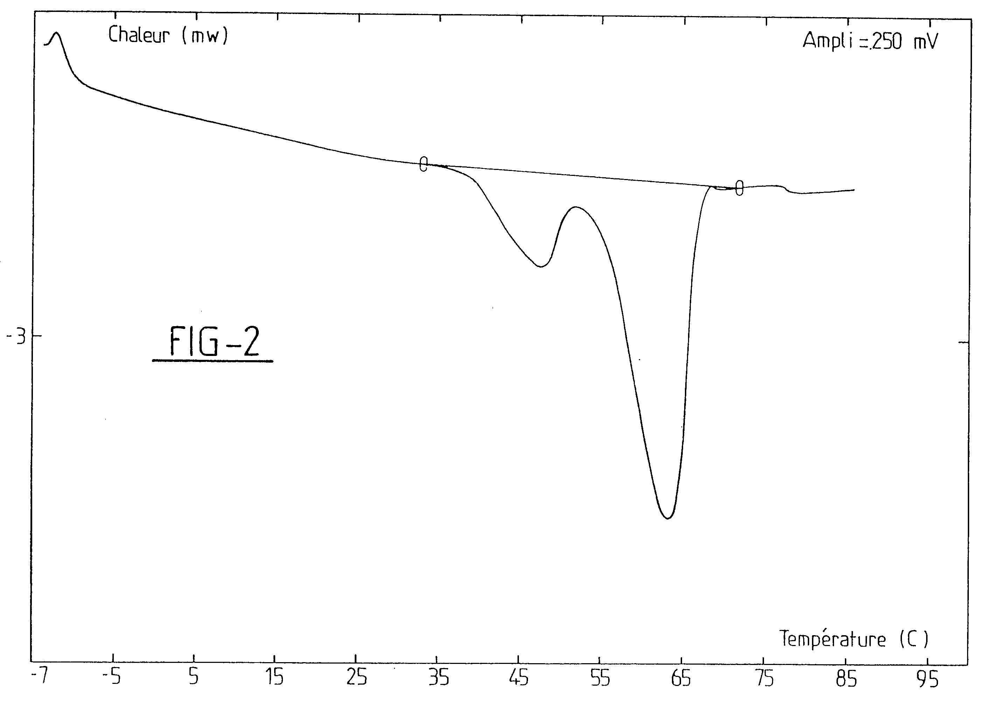

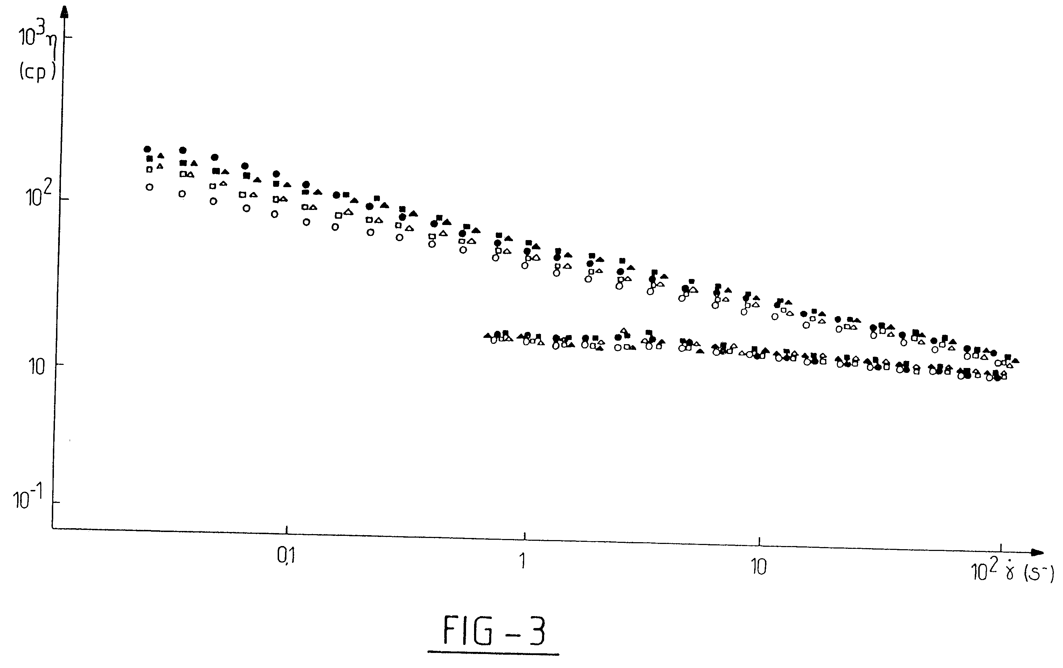

m = 7,20 mg
H = 41,8 cal/g
La fusion est détectée entre 33°C et 72,2°C
La température au sommet du pic est 63,8°C (figure 2)

**Détermination des chaleurs spécifiques**

La détermination des chaleurs spécifiques en programmation de température nécessite deux essais successifs:

- un premier essai blanc avec deux cellules vides,
- un deuxième essai, on conserve les mêmes cellules.

La cellule-mesure contient alors l'échantillon.

La différence d'amplitude des deux signaux est directement proportionnelle à la chaleur spécifique de l'échantillon.

Les résultats mesurés sont rassemblés dans les tableaux ci-après:

| Tableau I (paraffine seule) | | Tableau II (paraffine + styrène) | |
|---|---|---|---|
| Temperature (°C) | Chaleur Specifique (cal/g x °C) | Temperature (°C) | Chaleur Specifique (cal/g x °C) |
| −8,2 | 0,4008 | −8,2 | 0,4023 |
| −5,6 | 0,4349 | −5,6 | 0,4109 |
| −2,9 | 0,4622 | −2,9 | 0,4062 |
| −0,3 | 0,4890 | 0,3 | 0,3691 |
| 2,4 | 0,5125 | 2,4 | 0,3694 |
| 5,0 | 0,5342 | 5,0 | 0,3828 |
| 7,7 | 0,5571 | 7,7 | 0,4015 |
| 10,3 | 0,5749 | 10,3 | 0,4241 |
| 12,9 | 0,5890 | 12,9 | 0,4448 |
| 15,6 | 0,6055 | 15,6 | 0,4614 |
| 18,2 | 0,6051 | 18,2 | 0,4755 |
| 20,9 | 0,6047 | 20,9 | 0,4924 |
| 23,5 | 0,6170 | 23,5 | 0,5139 |
| 26,2 | 0,6211 | 26,2 | 0,5377 |

4

| Tableau I (paraffine seule) | | Tableau II (paraffine + styrène) | |
|---|---|---|---|
| Temperature (°C) | Chaleur Specifique (cal/g x °C) | Temperature (°C) | Chaleur Specifique (cal/g x °C) |
| 28,8 | 0,6347 | 28,8 | 0,5692 |
| 31,5 | 0,6495 | 31,5 | 0,6028 |
| 34,1 | 0,6738 | 34,1 | 0,6534 |
| 36,8 | 0,7062 | 36,8 | 0,7464 |
| 39,4 | 0,7921 | 39,4 | 0,8932 |
| 42,1 | 1,0362 | 42,1 | 1,1557 |
| 44,7 | 1,3912 | 44,7 | 1,4814 |
| 47,3 | 1,7337 | 47,3 | 1,7103 |
| 50,0 | 1,8819 | 50,0 | 1,6608 |
| 52,6 | 1,0970 | 52,6 | 1,3396 |
| 55,3 | 1,1854 | 55,3 | 1,7724 |
| 57,9 | 1,9755 | 57,9 | 2,9445 |
| 60,6 | 3,3859 | 60,6 | 4,2197 |
| 63,2 | 4,8268 | 63,2 | 4,2215 |
| 65,9 | 4,7190 | 65,9 | 1,8530 |
| 68,5 | 1,1372 | 68,5 | 0,7415 |
| 71,2 | 0,6709 | 71,2 | 0,7195 |
| 73,8 | 0,6421 | 73,8 | 0,7211 |
| 76,4 | 0,6344 | 76,4 | 0,7226 |
| 79,1 | 0,6267 | 79,1 | 0,7288 |
| 81,7 | 0,6186 | 81,7 | 0,7319 |
| 84,4 | 0,6137 | 84,4 | 0,7347 |
| 87,0 | 0,6130 | 87,0 | 0,7445 |
| 89,7 | 0,6179 | 89,7 | 0,7467 |
| 92,3 | 0,6223 | 92,3 | 0,7482 |
| 95,0 | 0,6301 | 95,0 | 0,7486 |
| 97,6 | 0,6302 | 97,6 | 0,7468 |

**Exemple 4**

Cet exemple a pour objet de mettre en évidence le comportement particulier des composites selon la présente invention en phase dispersée, en particulier le comportement rhéologique.

Ainsi, on a comparé:

- le matériau obtenu à l'exemple 2 en émulsion à une concentration volumique de 40 % à une température de 40°C, avec:
- une émulsion de paraffine seule, à la même concentration et à la même température.

Toutes choses égales par ailleurs, on effectue pour les deux émulsions des mesures de viscosité en fonction du cisaillement. Les résultats obtenus sont rassemblés sur la courbe 3 ci-annexée. L'ensemble des points constituant la courbe supérieure correspond à l'émulsion de paraffine seule, alors que les points de la courbe inférieure correspondent à une émulsion selon la présente invention. Les essais ont été effectués sur trois cycles à cisaillement croissant et décroissant.

Il ressort clairement de ces rhéogrammes que le cisaillement influe peu sur la viscosité des matériaux de l'invention et on note un effet moins marqué (résultats non dispersés) des cycles sur le comportement rhéologique dans le cas d'une phase dispersée de paraffine en présence de styrène selon la présente invention par rapport à une émulsion ordinaire. Enfin, on note une diminution sensible de la viscosité au faible cisaillement, qui correspond probablement à une diminution de l'agrégation interparticulaire.

Ces caractéristiques peuvent présenter un très grand intérêt. Tout d'abord dans les applications particulières envisagées pour les composés selon la présente invention et en particulier dans le cas où ces particules doivent être des particules circulantes.

**Revendications**

1. Procédé de préparation d'un matériau composite stable caractérisé en ce que l'on dissout dans un liquide, au moins un monomère choisi dans le groupe des composés comportant au moins une insaturation éthylénique, en ce que l'on polymérise ledit monomère de façon à créer un réseau tridimensionnel de polymérisat, sous forme dispersée ou continue, emprisonnant le liquide, en ce que ledit liquide est un liquide inerte vis-a-vis de la polymérisation en ce que ledit au moins un monomère est entièrement soluble dans ledit liquide et en ce que ledit liquide présente une température de transition solide/liquide inférieure à la température de polymérisation et un volume massique voisin de celui du polymérisat.

2. Procédé selon la revendication 1, caractérisé en ce que ledit liquide inerte est organique avantageusement une paraffine.

3. Procédé selon les revendications 1 et 2 prises séparément, caractérisé en ce que ledit composé au moins une insaturation éthylénique est choisi parmi le groupe constitué par le styrène, le divinylbenzène, les dérivés vinyliques, les esters de l'acide acrylique ou de l'acide métacrylique ainsi que leurs mélanges.

4. Procédé selon la revendication 3, caractérisé en ce que ledit liquide est une paraffine et en ce que ledit au moins un monomère est un mélange de styrène et de divinylbenzène.

5. Procédé selon les revendications 1 à 4 prises séparément, caractérisé en ce que la polymérisation est effectuée en masse.

6. Procédé selon les revendications 1 à 4 prises séparément, caractérisé en ce que la polymérisation est effectuée en émulsion aqueuse.

7. Procédé selon la revendication 6, caractérisé en ce que l'émulsion est effectuée par traitement ultrasonore.

8. Procédé selon les revendications 1 à 6 prises séparément, caractérisé en ce que la polymérisation est effectuée par chauffage.

9. Procédé selon les revendications 1 à 8 prises séparément, caractérisé en ce que la quantité de monomère est comprise entre 5 et 40 % en poids dudit liquide.

10. Matériau composite caractérisé en ce qu'il est constitué par un liquide inerte vis-à-vis de la polymérisation rigidifié par un réseau polymérique tridimensionnel, en ce que les motifs dudit réseau polymérique tridimensionnel correspondent à au moins un monomère comportant au moins une insaturation éthylénique en ce que ledit au moins un monomère est soluble dans ledit solvant, et en ce qu'il est susceptible d'être obtenu selon le procédé de l'une des revendications 1 à 9.

11. Matériau selon la revendication 10, caractérisé en ce que ledit liquide inerte est organique avantageusement une paraffine.

12. Matériau selon les revendications 10 et 11 prises séparément, caractérisé en ce que les températures de fusion dudit liquide inerte varient de -12°C à 76°C.

13. Matériau selon les revendications 10 à 12 prises séparément, caractérisé en ce que le réseau polymérique tridimensionnel présente 5 à 30 % en poids dudit matériau composite.

14. Matériau selon les revendications 10 à 13 prises séparément, caractérisé en ce que le matériau composite comporte des éléments choisis dans le groupe constitué par ceux qui modifient son spectre d'absorbtion et ceux bons conducteurs de la chaleur.

15. Matériau selon les revendications 10 à 14 prises séparément, caractérisé en ce que ledit solvant est choisi dans le groupe des paraffines et en ce que ledit monomère est un mélange de styrène et de divinylbenzène.

16. Application du matériau selon les revendications 10 à 15 prises séparément au stockage et au transport de l'énergie.

**Claims**

1. A method of preparing a stable composite material characterised in that at least one monomer chosen from the group of compounds having at least one unsaturated ethylene bond is dissolved in a liquid, the monomer is polymerized so as to produce a three-dimensional polymer network in dispersed or continuous form and imprisoning the liquid, the liquid is inert with regard to polymerization, the monomer or monomers are completely soluble in the liquid, and the liquid has a solid/liquid transition temperature below the polymerization temperature and a specific gravity near that of the polymer.

2. A method according to claim 1, characterised in that the inert liquid is organic, advantageously a paraffin.

3. A method according to claim 1 or 2 taken separately, characterised in that the compound containing at least one unsaturated ethylene bond is chosen from among the group comprising styrene, divinylbenzene, vinyl derivatives, acrylic or methacrylic acid esters and mixtures thereof.

4. A method according to claim 3, characterised in that the liquid is a paraffin and the monomer or monomers are a mixture of styrene and divinylbenezene.

5. A method according to claims 1 to 4 taken separately, characterised in that polymerization is brought about in mass.

6. A method according to claims 1 to 4 taken separately, characterised in that polymerization is brought about in aqueous emulsion.

7. A method according to claim 6, characterised in that the emulsion is made by ultrasonic treatment.

8. A method according to claims 1 to 6 taken separately, characterised in that polymerization is brought about by heating.

9. A method according to claims 1 to 8 taken separately, characterised in that the quantity of monomer is between 5 and 40% by weight of the liquid.

10. A composite material characterised in that it comprises a liquid which is inert with respect to polymerization and made rigid by a three-dimensional polymer network, the units of the three-dimensional polymer network correspond to at least one monomer containing at least one unsaturated ethylene bond, and the monomer or monomers are soluble in the solvent and can be obtained by the method according to any of claims 1 to 9.

11. A material according to claim 10, characterised in that the inert liquid is organic, advantageously a paraffin.

12. A material according to claims 10 and 11 taken separately, characterised in that the melting points of the inert liquid vary from -12°C to 76°C.

13. A material according to claims 10 to 12 taken separately, characterised in that the three-dimensional polymer network makes up 5 to 30% by weight of the composite material.

14. A material according to claims 10 to 13 taken separately, characterised in that the composite material comprises elements chosen from the group consisting of those which modify its absorption spectrum and elements which are good conductors of heat.

15. A material according to claims 10 to 14 taken separately, characterised in that the solvent is chosen from the group of paraffins and the monomer is a mixture of styrene and divinylbenzene.

16. Use of the material according to claims 10 to 15 taken separately, for storage and transport of energy.

**Patentansprüche**

1. Verfahren zur Herstellung eines stabilen zusammengesetzten Materials, *dadurch gekennzeichnet*, daß man in einer Flüssigkeit mindestens ein Monomeres, ausgewählt aus der Gruppe von Verbindungen mit mindestens einer ethylenischen Unsättigung, auflöst, daß man dieses Monomere so polymerisiert, daß ein dreidimensionales Polymerisatnetz in dispergierter oder kontinuierlicher Form gebildet wird, das die Flüssigkeit einschließt, daß die Flüssigkeit eine gegenüber der Polymerisation inerte Flüssigkeit ist, daß das mindestens eine Monomere gänzlich in der Flüssigkeit löslich ist und daß die Flüssigkeit eine fest/flüssig Übergangstemperatur unter der Polymerisationstemperatur und ein spezifisches Volumen ähnlich dem des Polymerisats aufweist.

2. Verfahren nach Anspruch 1, *dadurch gekennzeichnet*, daß die inerte Flüssigkeit organisch, vorteilhaft ein Paraffin, ist.

3. Verfahren nach einem der Ansprüche 1 oder 2, *dadurch gekennzeichnet*, daß die Verbindung mit mindestens einer ethylenischen Unsättigung ausgewählt wird aus der Gruppe von Styrol, Divinylbenzol, den Vinylderivaten, den Estern von Acrylsäure oder Methacrylsäure, sowie deren Gemischen.

4. Verfahren nach Anspruch 3, *dadurch gekennzeichnet*, daß die Flüssigkeit ein Paraffin ist und daß das mindestens eine Monomere ein Gemisch von Styrol und Divinylbenzol ist.

5. Verfahren nach einem der Ansprüche 1 bis 4, *dadurch gekennzeichnet*, daß die Poylmerisation in Masse durchgeführt wird.

6. Verfahren nach einem der Ansprüche 1 bis 4, *dadurch gekennzeichnet*, daß die Polymerisation in wäßriger Emulsion durchgeführt wird.

7. Verfahren nach Anspruch 6, *dadurch gekennzeichnet*, daß die Emulsion durch Ultraschallbehandlung erzielt wird.

8. Verfahren nach einem der Ansprüche 1 bis 6, *dadurch gekennzeichnet*, daß die Polymerisation durch Erwärmen erzielt wird.

9. Verfahren nach einem der Ansprüche 1 bis 8, *dadurch gekennzeichnet*, daß die Monomermenge zwischen 5 und 40 Gew.-% der Flüssigkeit liegt.

10. Zusammengesetztes Material, *dadurch gekennzeichnet*, daß es aus einer gegenüber der Polymerisation inerten, durch ein dreidimensionales polymeres Netz versteiften Flüssigkeit gebildet wird, daß die Einheiten des dreidimensionalen polymeren Netzes mindestens einem Monomeren mit mindestens einer ethylenischen Unsättigung entsprechen, daß das mindestens eine Monomere in dem Lösungsmittel löslich ist, und daß es erhältlich ist nach dem Verfahren eines der Ansprüche 1 bis 9.

11. Material nach Anspruch 10, *dadurch gekennzeichnet*, daß die inerte Flüssigkeit organisch, vorteilhaft ein Paraffin, ist.

12. Material nach einem der Ansprüche 10 und 11, *dadurch gekennzeichnet*, daß die Schmelztemperaturen der inerten Flüssigkeit von -12°C bis 76°C variieren.

13. Material nach einem der Ansprüche 10 bis 12, *dadurch gekennzeichnet*, daß das dreidimensionale Polymernetz 5 bis 30 Gew.-% des zusammengesetzten Materials bildet.

14. Material nach einem der Ansprüche 10 bis 13, *dadurch gekennzeichnet*, daß das zusammengesetzte Material Elemente umfaßt, die ausgewählt sind aus der Gruppe solcher, die sein Absorptionsspektrum modifizieren und solcher, die gute Wärmeleiter sind.

15. Material nach einem der Ansprüche 10 bis 14, *dadurch gekennzeichnet*, daß das Lösungsmittel ausgewählt wird aus der Gruppe von Paraffinen und daß das Monomere ein Gemisch von Styrol und Divinylbenzol ist.

16. Verwendung des Materials nach einem der Ansprüche 10 bis 15, zur Speicherung und Transportierung von Energie.

FIG - 1

Chaleur (mw)

Ampli =250 mV

Température (C)

FIG-2

FIG - 3